# EUROPEAN PATENT APPLICATION

(11) **EP 1 781 028 A2**
(43) Date of publication of application: **02.05.2007**
(21) Application number: 06252144.8
(22) Date of filing: 20.04.2006
(51) Int. Cl.: H04N 5/445

(54) **Method for changing and managing channels and broadcasting receiver therefore**

(30) Priority: 26.10.2005 KR 20050101297
(71) Applicant: LG Electronics Inc., Yongdungpo-gu Seoul (KR)
(72) Inventor: Lee, Su Zin, Daegu 703-805 (KR)
(74) Representative: Neobard, William John

(57) **Abstract**

The present invention relates to a method for changing/managing channels in a broadcasting receiver and a broadcasting receiver, which are capable of selecting all parts or a part of various kinds of programs; forming a channel group consisting of channels broadcasting the selected program type(s); and performing a channel change between the channels in the channel group.

The method for changing channels includes the steps of: selecting all parts or a part of various kinds of programs by using a user interface unit of the broadcasting receiver; forming a channel group consisting of channels broadcasting the selected program type(s); and performing a channel change between the channels in the channel group if a channel change request is received from the user interface unit.

## Description

The present invention relates to a broadcasting receiver, and to a method for changing/managing channels in a broadcasting receiver. Embodiments are capable of receiving various kinds of broadcastings.

With the development of technologies, the next generation digital broadcasting receiver of high quality such as a HDTV (high definition television) has been provided and commercialized.

As a performance of the HDTV is becoming finer, broadcasting signals that the HDTV can serve are getting more and more various. For example, there has been recently suggested a HDTV capable of receiving an analog broadcasting, a cable broadcasting, a DTV broadcasting, an audio broadcasting and a text broadcasting.

As such a HDTV receives and displays various kinds of programs, a user can also watch the various kinds of programs.

The user, however, may watch all parts of various programs or only a part of various programs according to the user's preference. That is, some users may watch only video and audio programs according to their habits.

Accordingly, it is strongly required to develop a technique for selecting all parts or a part of various kinds of programs according to a user's preference, forming a channel group consisting of programs of the selected kinds, and performing a channel change between channels in the channel group.

Moreover, channel numbers have not been assigned to channels of various kinds of programs sequentially according to program types, so that video and audio programs, audio programs, video programs, data programs and the like have been totally mixed while changing channels. As a result, in some cases, a user not experienced in viewing various types of programs misunderstood that a television broadcasting receiver is out of order or a user who wants to watch programs of a single program type felt inconvenience.

Therefore, it is also required to develop a technique for meeting various demands of a user by arranging channels sequentially according to program types, performing a channel change between the arranged channels, and displaying a channel map where channels are sorted.

In addition, though the HDTV receives and displays various types of programs, information representing a program type of each channel is not shown in the channel map.

Therefore, it is also required to develop a technology for easily recognizing a program type of each channel displayed on the channel map by showing channels of the channel map in different ways according to program types thereof.

Accordingly, the present invention has been made to address problems occurring in the

### prior art.

An object of embodiments is to provide a method for changing/managing channels and a broadcasting receiver, which are capable of selecting all parts or a part of various kinds of programs; forming a channel group consisting of channels broadcasting the selected program type(s); and performing a channel change between the channels in the channel group.

Further, it is another object of embodiments to provide a method for changing/managing channels and a broadcasting receiver, which are capable of arranging channels of various kinds of programs based on program types in order to change channels easily and displaying a channel map where channels are sorted on the basis of the program types.

Further, it is still another object of embodiments to provide a method for managing channels and a broadcasting receiver, which are capable of showing channels on the channel map in different ways according to the program types thereof

In one aspect, there is provided a method for changing channels in a broadcasting receiver, including the steps of: selecting all parts or a part of various kinds of programs by using a user interface unit of the broadcasting receiver; forming a channel group consisting of channels broadcasting the selected program type(s); and performing a channel change between the channels in the channel group if a channel change request is received from the user interface unit.

In another aspect, there is provided a method for managing channels in a broadcasting receiver, including the steps of: a first step for checking whether a request for displaying a channel map is received; a second step for reading identification information on program types of channels displayed on the channel map if the request for displaying the channel map is received; and a third step for displaying the channel map where channels are shown in different ways according to the identification information on program types.

In still another aspect there is provided a broadcasting receiver including: a user interface unit for providing a interface with a user, a memory unit for storing a channel group consisting of channels broadcasting all parts or a part of various kinds of programs according to a user's selection; a control unit for receiving a program type(s) selected through the user interface unit, forming the channel group consisting of channels broadcasting the selected program type(s), storing the channel group in the memory unit, and performing a channel change between the channels in the channel group if a channel change request is received from the user interface unit.

The invention will be more clearly understood from the following detailed description of exemplary embodiments taken in conjunction with the accompanying drawings, in which:
FIG. 1 is a block diagram showing a television broadcasting receiver embodying the present invention;
FIGs. 2, 4 and 6 are flow charts showing methods for changing/managing channels embodying the present invention; and
FIGs. 3, 5 and 7 are exemplary display screens.

### DETAILED DESCRIPTION OF THE PREFERRED EMBODIMENTS

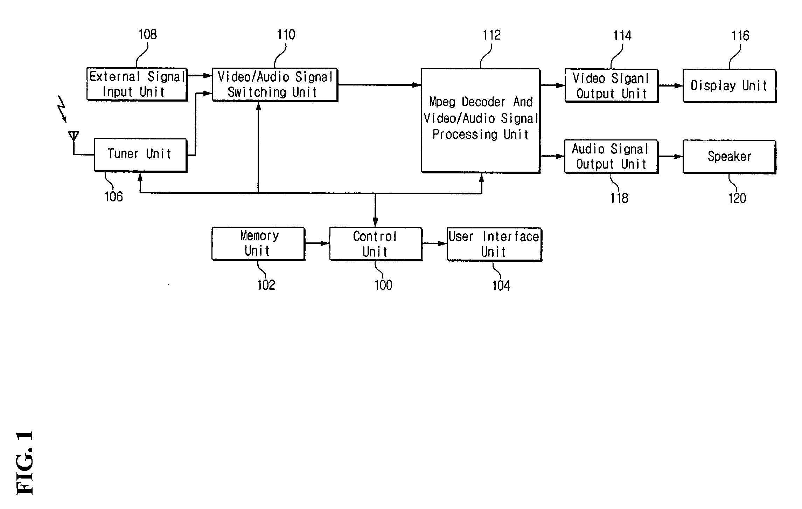

Referring FIG. 1 to, a control unit 100 of a television broadcasting receiver generally controls the television broadcasting receiver and also changes/manages channels.

In detail, the control unit 100 selects all parts or a part of various kinds of programs according to a user's request and constructs a channel group consisting of the selected programs and then performs a channel change between channels in the channel group in response to a channel change request of a user.

Further, the control unit 100 arranges channels showing various kinds of programs based on the type of program according to a user's request and performs a channel change between the arranged channels in response to a channel change request of a user.

Furthermore, the control unit 100 displays a channel map where various kinds of broadcastings are sorted based on the type of program in response to a user's request. Alternatively, the control unit 100 can mark each channel of the channel map in different ways according to the program type.

Moreover, the control unit 100 generates OSD data for practicing the present invention and then provides an MPEG decoder and a video/audio signal processing unit 112 with the OSD data in order to output a video signal mixed with the OSD data.

A memory unit 102 stores information including a control program of the control unit 100 and the like. Particularly, the memory unit 102 stores channel group information, a VCT (virtual channel table) and identification information on program types of channels. Herein, a program type for each channel can be determined based on the PID (packet ID) obtained by parsing the VCT in PSIP (program service information protocol) packets. That is, the control unit 100 determines packets received from each channel as a video program if the packets consist of video packets; decides packets as a audio program if the packets are made of audio packets; and judges packets as an audio and video program if the packets are composed of audio and video packets. Then, the control unit 100 stores thus obtained identification information on program types of channels in the memory unit 102.

At this time, a program type for each channel can also be determined through EPG (electronic program guide) data without using the PID. In case of using the EPG data, the control unit 100 detects a program type for each channel through the use of the EPG data and generates the identification information on program types and then stores it in the memory unit 102.

In addition, by using the VCT, a program type for each channel can also be determined. In case of using the VCT, the control unit 100 detects a program type for each channel through the use of the VCT and generates the identification information on program types and then stores it in the memory unit 102.

A keypad or a remote control unit can be employed as a user interface unit 104. The user interface unit 104 receives various instructions or information from a user and provides them to the control unit 100.

A tuner unit 106 tunes into a channel among signals received from a antenna under control of the control unit 100 and restores a TS (transport stream) received from the tuned channel into a video stream, an audio stream and a data stream. Then, the tuner unit 106 supplies the video stream and the audio stream to the MPEG decoder and video/audio signal processing unit 112 through a video/audio signal switching unit 110 and provides the data stream to the control unit 100. Herein, the data stream includes the EPG data.

The video/audio signal switching unit 110 provides the MPEG decoder and video/audio signal processing unit 112 with an external signal inputted from a external signal input unit 108 or a broadcasting signal received from the tuner unit 106 according to a control of the control unit 100.

The MPEG decoder and video/audio signal processing unit 112 decodes and processes the video stream and the audio stream received from the video/audio signal switching unit 110 and then provides them to a video signal output unit 114 and an audio signal output unit 118. Moreover, the MPEG decoder and video/audio signal processing unit 112 mixes the OSD data generated by the control unit 100 with the processed video stream to generate a video signal and then provides the video signal to the video signal output unit 114.

The video signal output unit 114 outputs the video signal provided by the MPEG decoder and video/audio signal processing unit 112 to a display unit 116.

The audio signal output unit 118 outputs an audio signal provided by the MPEG decoder and video/audio signal processing unit 112 to a speaker 120.

For convenience' sake, there will be described a process for constructing a channel group in response to a user's request; a process for sorting channels based on program types thereof and then changing channels in response to a user's request; a process for arranging channels in the channel map; and a process for showing channels on the channel map in different ways according to program types.

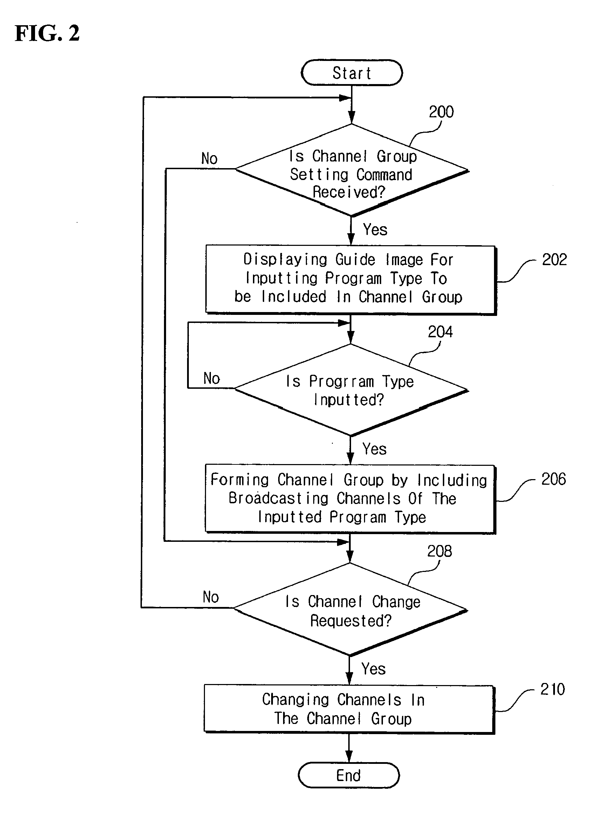

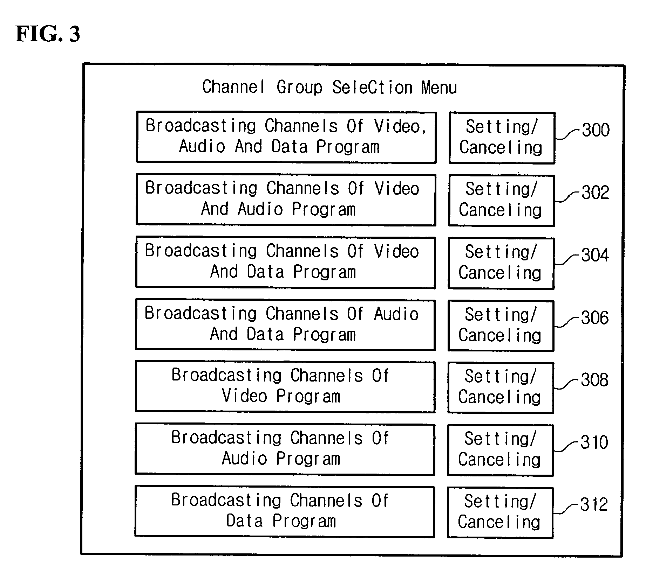

First, a process for setting a channel group will be described with reference to FIGs. 2 and 3.

The control unit 100 of the television broadcasting receiver checks whether a channel group setting command is received from the user interface unit 104 (step 200).

If the channel group setting command is received, the control unit 100 provides an OSD data for displaying a guide image for inputting a program type(s) to be included in a channel group to the MPEG decoder and video/audio signal processing unit 112 as shown in FIG. 3. The MPEG decoder and video/audio signal processing unit 112 mixes the OSD data with a video signal so that the guide image as shown in FIG. 3 can be displayed on the display unit 116 (step 202).

The guide image shown in FIG. 3 includes selection buttons 300 to 312 for setting broadcasting channels of video, audio and data program; broadcasting channels of video and audio program; broadcasting channels of video and data program; broadcasting channels of audio and data program; broadcasting channels of video program; broadcasting channels of audio program; and broadcasting channels of data program to be included in the channel group or canceling them, respectively.

Through the guide image, a user can select a program type(s) that he wants to include in the channel group. For example, the user can include only broadcasting channels of video, audio and data program in the channel group, or can include only broadcasting channels of video, audio and data program and broadcasting channels of video and audio program in the channel group. Of course, it is also possible to include only broadcasting channels of video, audio and data program, broadcasting channels of video and audio program and broadcasting channels of video and data program in the channel group. As mentioned above, embodiments make it possible to construct the channel group according to a user's preference.

If the program type(s) that the user wants to include in the channel group is inputted through the guide image (step 204), the control unit 100 forms the channel group by including broadcasting channels corresponding to the inputted program type(s) (step 206) therein.

After the formation of the channel group is completed, the control unit 100 checks whether a channel change request is inputted through the user interface unit 104 (step 208).

If the channel change is requested, the control unit performs a channel change between channels in the channel group consisting of broadcasting channels of the program type(s) that the user chose (step 210).

As described above, it is possible that the user of the television broadcasting receiver capable of reproducing various kinds of broadcastings selects only broadcasting channels of the program type(s) that he wants to watch to construct the channel group, thereby improving user's convenience.

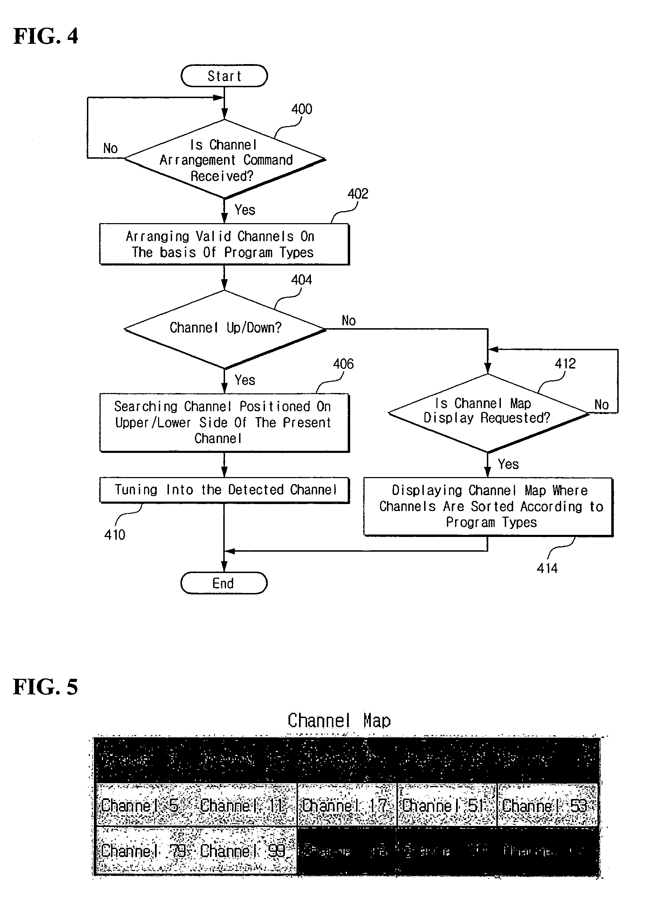

Next, there will be described a process for arranging channels based on program types thereof in response to a user's request, executing a channel change and displaying a channel map where the channels are arranged with reference to FIGs. 4 and 5.

The control unit 100 of the television broadcasting receiver checks whether a channel arrangement command is received from the user interface unit 104 (step 400).

If the channel arrangement command is received, the control unit 100 reads the identification information on program types of channels from the memory unit 102 and arranges all valid channels on the basis of the program types (step 402)

If the user requests a channel change by using a channel up/down button, the control unit 100 searches a channel positioned on the upper/lower side of the present channel (step 406). If the channel positioned on the upper/lower side of the present channel is detected, the control unit 100 controls the tuner unit 106 to tune into the detected channel to thereby carry out the channel change (step 410).

As described above, it is easy to move between broadcasting channels of the program types that the user wants to watch since channels was sorted on the basis of the program types.

Further, the control unit 100 checks whether a channel map display is requested from the user (step 412). If the channel map display is requested, the control unit 100 displays a channel map where channels are sorted according to the program types (step 414).

That is, the channel map is displayed based on the program type instead of the channel number as shown in FIG. 5. In detail, the channel map is displayed in the order of channels 3, 15, 50, 82 and 100 of video, audio and data program; channels 5, 11, 17, 51, 53, 79 and 99 of video and audio program; and channels 16, 20 and 61 of video and data program.

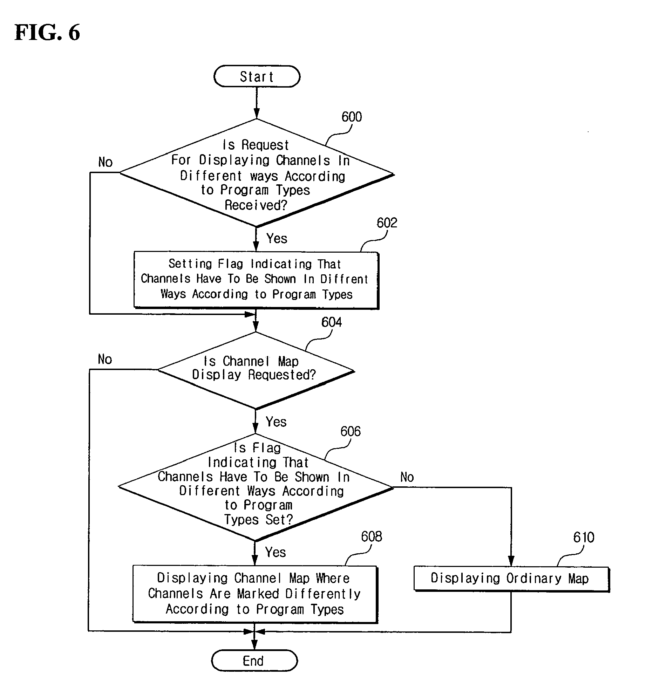

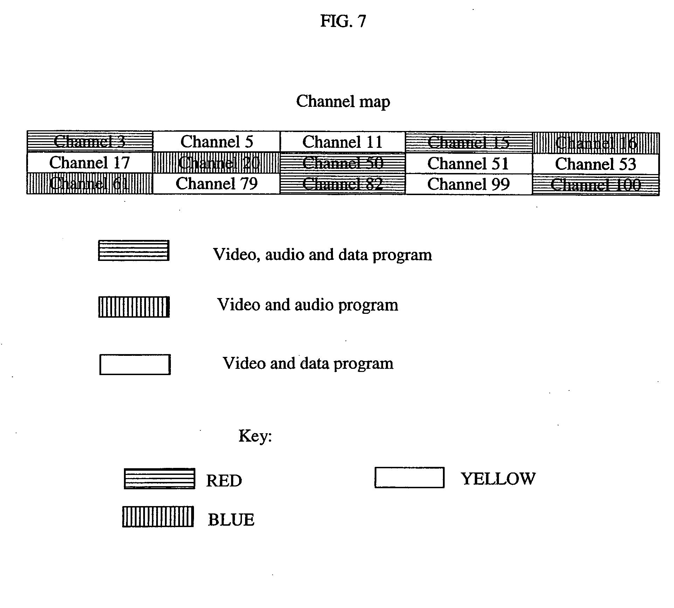

In the following, there will be described a process for marking channels displayed on the channel map in different ways according to the program type with reference to FIGs. 6 and 7.
the channel map to display channels in different ways according to the program type through the user interface unit 104 (step 600). If a request for displaying channels in different ways according to program types thereof is received from the user, the control unit 100 sets a flag indicating that channels have to be shown in different ways according to the program types when the channel map is displayed (step 602). The setting process such as above can be carried out through the use of menu of the television broadcasting receiver or can be omitted in order to improve user's convenience.

The control unit 100 checks whether a channel map display is requested through the user interface unit 104 (step 604). If the user requests the channel map display, the control unit 100 checks the flag indicating that channels have to be shown in different ways according to the program types is set (step 606). If the flag for showing channels in different ways according to the program types is not set, the control unit 100 displays an ordinary channel map (step 610).

In contrast, if the flag for show channels in different ways according to the program types is set, the control unit reads the identification information on program types for all channels displayed on the channel map from the memory unit 102 and displays the channel map where the channels are marked differently according to the read identification information (step 608).

An exemplary channel map is shown in FIG. 7 where channels are marked differently according to the program types. That is, channels 3, 15, 50, 82 and 100 of video, audio and data program are shown with horizontal hatching (red on actual screen); channels 5, 11, 17, 51, 53, 79 and 99 of video and audio program are marked with vertical hatching (yellow on actual screen); and channels 16, 20 and 61 of video and data program are un-filled (blue on screen).

Moreover, at the bottom side of the channel map, color information for notifying the user to know the program type that each color indicates is displayed. As a result, the user can easily recognize a program type of a channel by using only the color of the channel.

As mentioned above, it is possible that the user easily recognizes the program type of each channel displayed on the channel map since channels on the channel map are differently depicted according to the program types.

Embodiments of the present invention improve user convenience by selecting all parts or a part of various kinds of programs and constructing a channel group consisting of the selected program types and then performing a channel change between channels in the channel group.

Further, embodiments improve user convenience by arranging channels of various kinds of programs based on the program types in order to change channels easily, and by displaying a channel map where channels are sorted on the basis of the program types.

Furthermore, embodiments have the advantage of easily recognizing a program type of each channel by showing channels on the channel map in different ways according to program types thereof

Although an embodiment has been described for illustrative purposes, those skilled in the art will appreciate that various modifications, additions and substitutions are possible, without departing from the scope of the invention.

## Claims

1. A method for changing channels in a broadcasting receiver, comprising the steps of:
selecting all parts or a part of various kinds of programs by using a user interface unit of the broadcasting receiver;
forming a channel group consisting of channels broadcasting the selected program type(s); and
performing a channel change between the channels in the channel group if a channel change request is received from the user interface unit.

2. The method of claim 1, further comprising the steps of:
reading identification information on program types of channels in the channel group;
sorting the channels based on the identification information on program types; and
changing a current channel to an adjacent channel in the order of the sorted channels if the channel change request is received.

3. A method for managing channels in a broadcasting receiver, comprising the steps of:
a first step for checking whether a request for displaying a channel map is received;
a second step for reading identification information on program types of channels displayed on the channel map if the request for displaying the channel map is received; and
a third step for displaying the channel map where channels are shown in different ways according to the identification information on program types.

4. The method of claim 3, wherein, in the third step, the channels are sorted based on the identification information on program types.

5. The method of claim 1 or 3, further comprising the step of:
storing the identification information on program types by identifying a program type for each channel through the use of a PID (packet ID) received from each channel, EPG (electronic program guide) data, or a VCT (virtual channel table).

6. The method of claim 3, wherein the channels displayed on the channel map are depicted with different colors according to a program type of each channel.

7. The method of claim 3, wherein the channel map displays additional information for notifying a user to know a program type of each channel shown in different ways.

8. A broadcasting receiver comprising:
a user interface unit for providing a interface with a user;
a memory unit for storing a channel group consisting of channels broadcasting all parts or a part of various kinds of programs according to a user's selection;
a control unit for receiving a program type(s) selected through the user interface unit,
forming the channel group consisting of channels broadcasting the selected program type(s), storing the channel group in the memory unit, and performing a channel change between the channels in the channel group if a channel change request is received from the user interface unit.

9. The broadcasting receiver of claim 8 or the method of claim 1, wherein the channel group includes at least one of broadcasting channels of video, audio and data program; broadcasting channels of video and audio program; broadcasting channels of video and data program; broadcasting channels of audio and data program; broadcasting channels of video program; broadcasting channels of audio program; and broadcasting channels of data program.

10. The broadcasting receiver of claim 8, wherein, upon receiving a request for arranging channels based on a program type from the user interface unit, the control unit reads identification information on program types of channels in the channel group; sorts the channels based on the identification information on program types; stores the sorted channels in the memory unit; and changes a current channel to an adjacent channel in the sorted channels if a channel change request is received from the user interface unit.

11. A broadcasting receiver comprising:
a video signal output unit for outputting a video signal to a display unit;
a video signal processing unit for mixing OSD data with a video stream to generate the video signal and providing the video signal to the video signal output unit;
a user interface unit for providing a interface with a user;
a memory unit for storing identification information on program types of channels;
a control unit for reading the identification information on program types of channels displayed on a channel map if a request for displaying the channel map is received from the user interface unit, and providing the OSD data for showing the channels of the channel map in different ways based on the identification information on program types to the video signal processing unit.

12. The broadcasting receiver of claim 11, wherein the control unit stores the identification information on program types in the memory unit by identifying a program type for each channel through the use of a PID (packet ID) received from each channel, EPG (electronic grogram guide) data, or a VCT (virtual channel table).

13. The broadcasting receiver of claim 11, wherein the control unit shows the channels of the channel map with different colors according to a program type of each channel.

14. The broadcasting receiver of claim 11, wherein the control unit includes additional information for notifying a user to know a program type of each channel shown in different ways in the OSD data.

15. The broadcasting receiver of claim 11, wherein the control unit sorts the channels displayed on the channel map based on the identification information on program types of the channels in response to a channel arrangement request from the user interface unit.
